# EUROPÄISCHE PATENTSCHRIFT

(11) **EP 1 566 363 B1**
(45) Veröffentlichungstag und Bekanntmachung des Hinweises auf die Patenterteilung: **12.10.2011**
(21) Anmeldenummer: 05003589.8
(22) Anmeldetag: 18.02.2005
(51) Int. Cl.: C03B 11/06, C03B 29/00

(54) **Verfahren und Vorrichtung zur Glättungsbehandlung von Trinkgläsern**
Method and apparatus for smoothing drinking glasses
Méthode et procédé de lissage des verres à boire

(30) Priorität: 19.02.2004 DE 102004008151; 14.07.2004 DE 102004033981
(43) Veröffentlichungstag der Anmeldung: 24.08.2005
(73) Patentinhaber: Zwiesel Kristallglas AG, 94227 Zwiesel (DE)
(72) Erfinder: Heller, Kurt, 94258 Frauenau (DE)
(74) Vertreter: Müller-Boré & Partner Patentanwälte

(56) Entgegenhaltungen:
- CH-A- 387 235
- DE-B- 1 235 531
- GB-A- 1 152 783
- US-A- 2 883 797
- PATENT ABSTRACTS OF JAPAN Bd. 1996, Nr. 10, 31. Oktober 1996 (1996-10-31) & JP 08 143321 A (ISHIZUKA GLASS CO LTD), 4. Juni 1996 (1996-06-04)

## Beschreibung

Die vorliegende Erfindung bezieht sich auf ein Verfahren und eine Vorrichtung zur Glättungsbehandlung von Trinkgläsern.

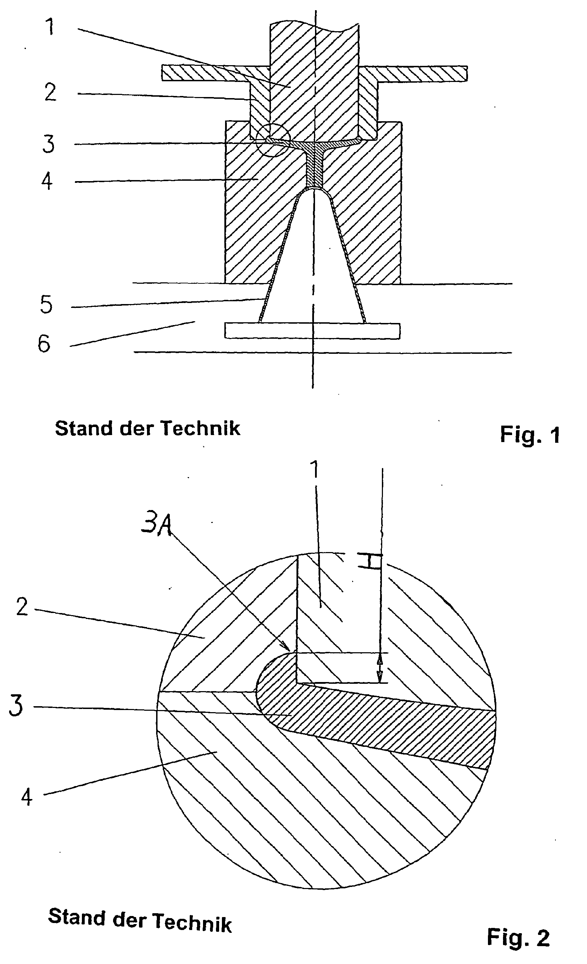

Bei der Herstellung von Glasprodukten, wie beispielsweise Trinkgläsern, wird ein flüssiger Glastropfen in eine Form 4 eingespeist, wie in Fig. 1 gezeigt ist. Danach führt ein mit der Form 4 über einen Zentrierring in Eingriff gebrachter Zylinderring 2 einen Preßstempel 1 mit Druckkraft nach unten, wodurch in dem in Fig. 1 gezeigten Beispiel ein Stiel mit Boden 3 eines Trinkglases ausgepreßt wird. Aufgrund von Toleranzen der eingespeisten Glasvolumenmenge und von Toleranzen der Formen 4 entsteht eine verschieden hohe Ringstufe 3A am Rand des Bodens 3 des Glases. Der Preßstempel 1 taucht dabei je nach Flüssigkeitsmenge des Glastropfens und je nach der Volumentoleranz der betreffenden Form 4 weiter oder weniger weit in den Boden 3 ein.

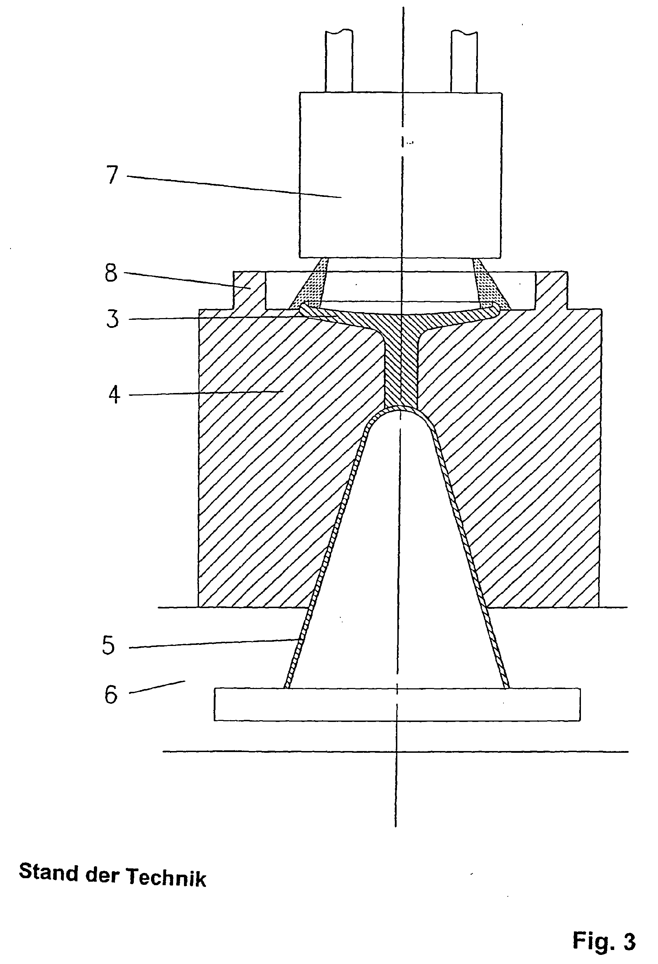

Die entstehende Ringstufe 3A des Bodens 3 eines Trinkglases stellt sowohl eine optische als auch eine mechanische Beeinträchtigung des hergestellten Produkts dar und muss deshalb geglättet werden. Die japanische Patentanmeldung JP 08-A-143321 schlägt zur Glättungsbehandlung der Ringstufe 3A vor, eine mit Brennern versehene drehbare koaxiale Vorrichtung 7, wie in Fig. 3 gezeigt ist, über der Form 4 drehbar anzuordnen, so daß durch erneutes Schmelzen der Ringstufe 3A und durch die Schwerkraft eine Glättungsbehandlung der Ringstufe 3A erfolgt.

Dieses Verfahren hat jedoch gewisse Nachteile. Wenn die Form 4 beispielsweise auf einem Takttisch 6 angeordnet ist, der sich im Arbeitstakt von weiteren Bearbeitungsschritten weiter dreht, steht nur eine gewisse Zeitspanne für die Glättungsbehandlung zur Verfügung. Deshalb müssen die Brenner eine entsprechend hohe Brennerleistung haben, um die Ringstufe 3A in kurzer Zeit zum Schmelzen zu bringen. Die Brennerleistung muß außerdem noch erhöht werden, da der vertikale Abstand der Drehvorrichtung 7 mit den Brennern aufgrund der Ringstufe 8 nicht verringert werden kann. Es muß nämlich ein bestimmter Abstand zwischen der Vorrichtung 7 mit den Brennern und der Ringstufe 8 vorgesehen werden, um eine Weiterdrehung bzw. Weiterbewegung der Form 4 zu der nächsten Bearbeitungsstation nicht zu beeinträchtigen.

Aufgrund der hohen erforderlichen Brennerleistung wird der Boden 3 des Glasprodukts und die Form 4 sehr stark aufgeheizt, wodurch weitere Fertigungsabläufe beeinträchtigt werden. Deshalb ist eine starke Abkühlung des Bodens 3 des Glasprodukts als auch der Form 4 erforderlich.

Darüber hinaus kann mit diesem Verfahren nur eine bestimmte Ringstufenhöhe von etwa bis zu 0,4 mm geglättet werden. Die Glasprodukte müssen somit mit hoher Genauigkeit gepresst werden und Glasprodukte mit einer zu hohen Ringstufe können nicht weiter verarbeitet werden. Hierdurch verringert sich die Ausbeute und die Produktivität.

Die Aufgabe der vorliegenden Erfindung besteht somit in der Verbesserung eines Verfahrens zur Glättungsbehandlung von Glasprodukten sowie in der Schaffung einer verbesserten Vorrichtung, so daß die Qualität von Glasprodukten verbessert werden kann und darüber hinaus der Energiebedarf bei der Glasherstellung und Verarbeitung auf ein Minimum reduziert werden kann. Außerdem soll die Produktivität bei der Herstellung der Glasprodukte erhöht werden.

Diese Aufgabe wird durch eine Vorrichtung nach Anspruch 1 sowie ein Verfahren nach Anspruch 10 gelöst. Vorteilhafte Weiterbildungen der Erfindung sind in den abhängigen Ansprüchen angeführt.

Die erfindungsgemäße Vorrichtung zur Glättungsbehandlung von Glasprodukten, insbesondere von Trinkgläsern, weist folgende Bauteile auf: eine Glasform 4 für die Aufnahme eines zu glättenden Glasprodukts, einen Hauptkörper 20, der gegenüber einer Glasform 4 vertikal beweglich ist und einen Zentrierflansch 9 aufweist zum in Eingriff treten mit einer an der Glasform 4 angebrachten Ringzentrierung 8; einen Drehkörper 21, der an dem Hauptkörper 20 drehbar gelagert ist und zumindest eine Wärmequelle 13 aufweist, die durch die Drehung des Drehkörpers 21 auf einer Kreisbahn in Gegenüberlage zu dem Glasprodukt drehbar ist, so dass durch die durch die Wärmequelle 13 auf das Glasprodukt aufgebrachte Wärme dieses zumindest teilweise geschmolzen wird, um an dem Glasprodukt entlang der Kreisbahn eine Glättungsbehandlung durchzuführen.

Vorzugsweise ist der Zentrierflansch 9 mit einer stirnseitigen Anschlagfläche 9A versehen, um mit einer Stirnfläche 8A der Ringzentrierung 8 der Glasform 4 so in Eingriff zu treten, dass eine Winkellage einer Achse des Hauptkörpers 20 sichergestellt ist, wenn der Hauptkörper 20 von einer Hubvorrichtung 10A, 11A und einer Antriebsvorrichtung 14 kräftefrei entkoppelt ist. Hierdurch wird unabhängig von Fertigungs- oder Montageabweichungen immer eine präzise Winkellage der Vorrichtung gegenüber der Glasform auf einfache Weise erzielt.

Vorzugsweise ist die Wärmequelle 13 ein Gasbrenner, der horizontal, vertikal und im Anstellwinkel verstellbar ist. Der Einsatz eines Gasbrenners bietet den Vorteil, dass die auf das Glasprodukt aufgebrachte Wärme zielgenau und in ihrem Energiebetrag sehr präzise gesteuert werden kann.

Der Drehkörper 21 ist vorzugsweise durch eine längsverschiebbare Doppelgelenkwelle 14 antreibbar, die an sein der Wärmequelle 13 entgegengesetztes axiales Ende angeflanscht ist. Die Längsverschiebbarkeit der Doppelgelenkwelle 14 bietet dabei den Vorteil, dass die Vorrichtung vertikal bzw. axial zu der Antriebswelle bewegt werden kann und die Vorrichtung selbst leichtgewichtig gestaltet werden kann, da der Antriebsmotor von der Vorrichtung getrennt angeordnet ist. Insbesondere wird durch die Längsverschiebbarkeit das kräftefreie Aufsetzen der Vorrichtung gewährleistet, so dass eine Winkellage der Achse des Hauptkörpers auch dann noch gewährleistet ist, wenn eine Winkelabweichung zwischen der Doppelgelenkwelle oder dem Hauptkörper und der Glasform vorhanden ist.

Es kann jedoch auch jede andere Antriebsquelle eingesetzt werden, beispielsweise ein in die Vorrichtung integrierter Elektromotor.

Vorzugsweise ist der Drehkörper 21 zum Bewegen des Drehkörpers 21 oder eines mit dem Drehkörper 21 in Eingriff befindlichen Bauteils 15 in der vertikalen Richtung pneumatisch mit Druck beaufschlagbar und der Druck ist zwischen einem Unterdruck und einem Überdruck einstellbar.

An dem Drehkörper 21 kann darüber hinaus ein Walzrad 12 angebracht sein, welches derart angeordnet ist, um bei Betätigung der Vorrichtung auf der Kreisbahn auf dem Glas abzurollen, um zusätzlich eine mechanische Glättung des Glases zu erzielen.

Dabei kann das Walzrad 12 zur Kühlung über einen Gaskanal 12.2 mit einem Gas angeblasen werden. Als Gas kann einfach Druckluft eingesetzt werden, die über einen Kompressor erzeugt und in Hochdruckflaschen gespeichert wird, oder Stickstoff aus handelsüblichen Hochdruckflaschen. Es kann jedoch auch eine nebelartiges Gemisch wie beispielsweise Aerosol (Wasser mit Luft versetzt) eingesetzt werden, wenn eine besonders hohe Kühlleistung gefordert wird.

Das Walzrad 12 weist vorzugsweise eine Gasführung 12.1 zum Leiten des Gases entlang einer Oberfläche des Walzrads 12 auf. Hierdurch kann die Kühlwirkung des ausströmenden Gases bzw. der Flüssigkeit weiter gesteigert werden.

Das Glasprodukt ist vorzugsweise rotationssymmetrisch und im wesentlichen auf derselben Achse wie der Drehkörper 21 angeordnet. Die Erfindung ist jedoch nicht darauf beschränkt. Es können vielmehr auch andere Glasprodukte mit der erfindungsgemäßen Vorrichtung bearbeitet werden.

Das erfindungsgemäße Verfahren zur Glättungsbehandlung von Glasprodukten weist folgende Schritte auf: Zentrieren eines Hauptkörpers 20 einer Glättungsvorrichtung an einer Glasform 4 der Glättungsvorrichtung durch in Eingriff bringen eines Zentrierflansches 9 des Hauptkörpers 20 mit einer an der Glasform 4 angebrachten Ringzentrierung 8; Drehen eines Drehkörpers 21 der Vorrichtung; und Betreiben von zumindest einer Wärmequelle 13, die auf einer Kreisbahn an dem Drehkörper 21 in Gegenüberlage zu einem in der Glasform 4 befindlichen Glasprodukt angeordnet ist.

Vorzugsweise weist das Verfahren noch den Schritt des Festlegens einer Winkellage der Glättungsvorrichtung auf durch in Eingriff bringen einer Anschlagfläche 9A des Zentrierflansches 9 mit einer Stirnfläche 8A der Ringzentrierung 8 der Glasform 4 und kräftefreies Entkoppeln der Glättungsvorrichtung von einer Hubvorrichtung 10A, 11A und einer Antriebsvorrichtung 14.

Vorzugsweise wird die Wärmequelle 13 in horizontaler und vertikaler Richtung und bezüglich ihres Anstellwinkels eingestellt.

Zur weiteren Verbesserung der Glättung kann ein Walzrad 12 auf einer Kreisbahn auf dem Glasprodukt abgewälzt werden. Vorzugsweise wird hierzu eine Druckkraft auf eine Walzradachse 15 erzeugt, um die Walzräder 12 mit einer definierten Kraft auf das Glasprodukt zu drücken. Des weiteren können die Walzrader 12 durch Anblasen mit Luft oder Stickstoff gekühlt werden. Dabei kann das Fluid entlang einer Oberfläche des Walzrads 12 geführt werden. Der Durchsatz des Fluids kann dabei entweder durch eine Drosseleinrichtung wie beispielsweise ein Dosierventil, eine Drossel oder einen Druckregler oder alternativ durch Anpassen des in der Walzradachse 15 angeordneten Fluidkanals 12.2 bestimmt werden, d.h. durch Auswechseln der Walzradachse 15 durch eine andere Walzradachse 15 mit einem anderen Durchmesser des Fluidkanals 12.2 kann der Durchsatz so angepasst werden, dass die Kühlwirkung verringert oder erhöht wird, um eine verbesserte Glättungswirkung des Glasprodukts zu erzielen.

Die Erfindung wird anhand von Zeichnungen beispielhaft beschrieben.
Fig. 1 zeigt eine schematische Schnittansicht einer herkömmlichen Vorrichtung zum Pressen eines Stiels mit Boden 3 eines Trinkglases in einer Form 4 mittels eines Preßstempels 1;
Fig. 2 zeigt die durch das in Fig. 1 gezeigte Preßverfahren entstehende Ringstufe 3A am Umfang des Rands 3 des Trinkglases;
Fig. 3 zeigt eine herkömmliche Glättungsbehandlung der Ringstufe 3A mittels einer über der Form 4 angeordneten drehbaren Vorrichtung 7 mit an ihrem Umfang angeordneten Brennen;
Fig. 4 zeigt eine Schnittansicht einer erfindungsgemäßen Vorrichtung für die Glättungsbehandlung gemäß einem ersten Ausführungsbeispiel in der Bereitschaftsstellung;
Fig. 4A zeigt die in Fig. 4 gezeigte erfindungsgemäße Vorrichtung in der eingetauchten Bearbeitungsstellung;
Fig. 4B zeigt die in den Figuren 4 und 4A gezeigte Vorrichtung im Schnitt A-A;
Fig. 5 zeigt die in Fig. 4 gezeigte Vorrichtung, wobei ein Drehkörper 21 um 90° gedreht ist;
Fig. 5A zeigt die eingetauchte Betriebsstellung der in Fig. 5 gezeigten Vorrichtung;
Fig. 5B zeigt einen Schnitt durch die in Fig. 5 gezeigte Vorrichtung entlang einer Linie F - F;
Fig. 6 zeigt eine Schnittansicht eines zweiten Ausführungsbeispiels der erfindungsgemäßen Vorrichtung; und
Fig. 6A zeigt die in Fig. 6 gezeigte Vorrichtung im Schnitt B-B.

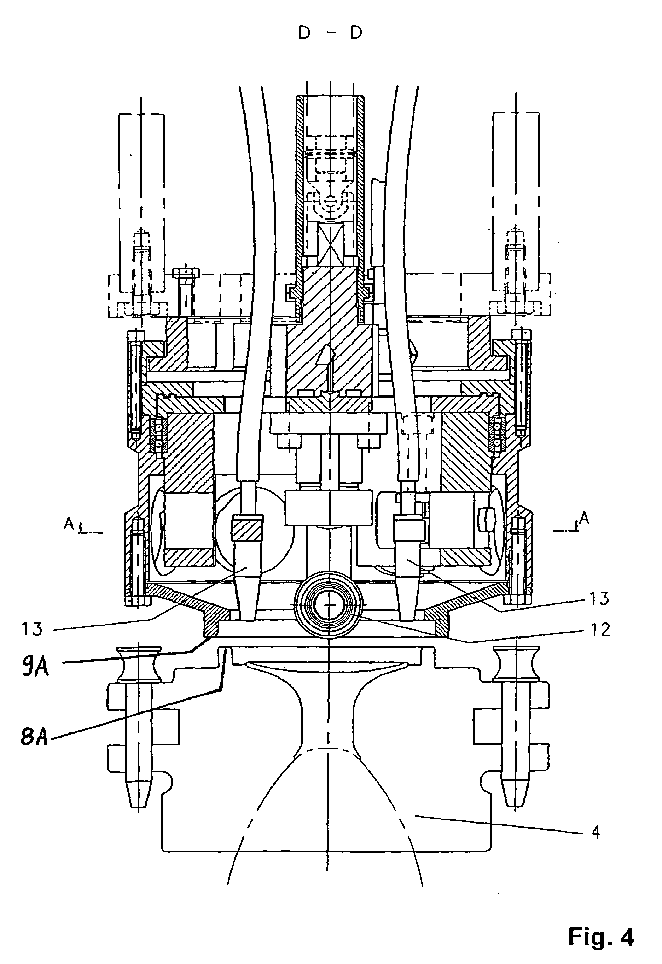

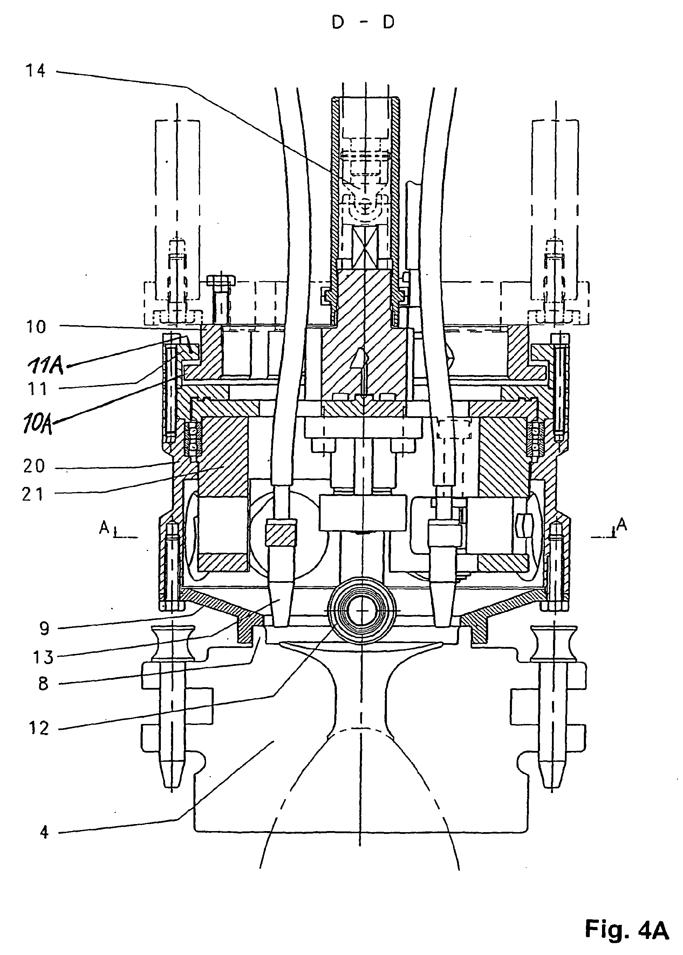

Wie in Fig. 4A gezeigt ist, weist eine bevorzugte erfindungsgemäße Vorrichtung gemäß einem ersten Ausführungsbeispiel einen Hauptkörper 20 und einen Drehkörper 21 auf. Der Hauptkörper 20 ist in der Gestalt eines nach oben und unten offenen Zylinders ausgebildet und erfüllt die Funktion einer Tragglocke. Der Hauptkörper kann mittels eines Hubflansches 10, der in Eingriff steht mit einem Tragring 11, angehoben und gesenkt werden. Hierzu ist der Hubflansch 10 mit entsprechenden (nicht gezeigten) Aktuatoren verbunden. Die Aktuatoren können pneumatisch, hydraulisch oder elektrisch angetrieben sein. Der Hubflansch 10 hat eine scheibenförmige Form mit einem radial nach außen vorstehendem Ringabsatz 10A an seinem unteren Ende. Der Tragring 11 ist ebenfalls mit einem Ringabsatz 11A versehen, der an seinem oberen Ende radial nach innen vorsteht, um mit dem Ringabsatz 10A in Eingriff zu treten. Darüber hinaus ist der Tragring 11 mit dem Hauptkörper 20 starr verbunden, beispielsweise über Schrauben.

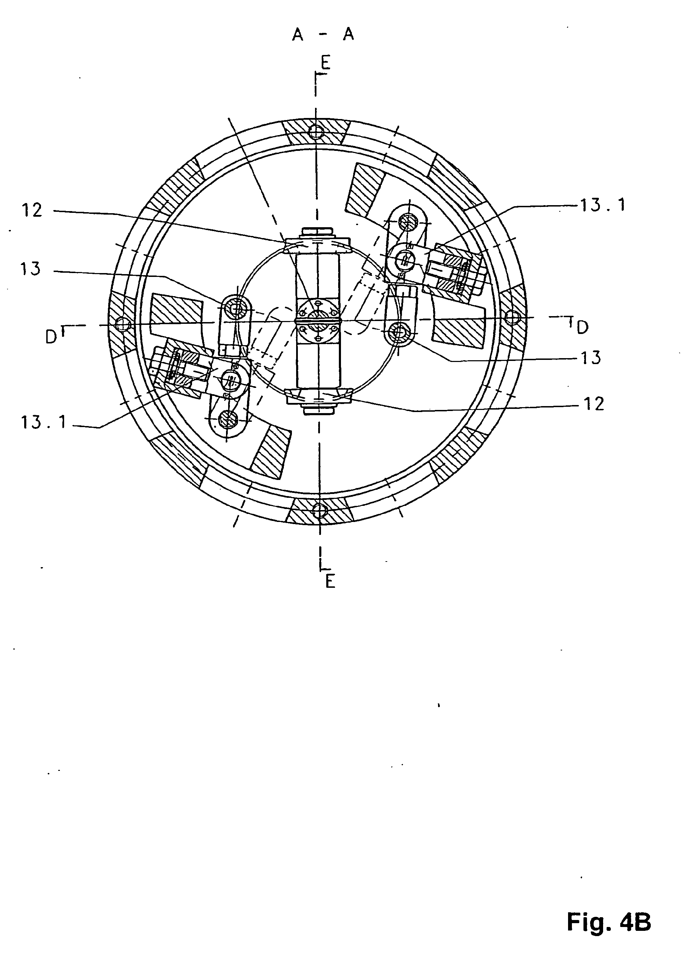

Somit kann der Hauptkörper 20 über die Betätigung der Aktuatoren von der in Fig. 4A gezeigten Betriebsstellung in die in Fig. 4 gezeigte Bereitschaftsstellung angehoben werden.

Bei der in Fig. 4 gezeigten Bereitschaftsstellung kann die Form 4 gegenüber dem Hauptkörper 20 zu einer weiteren Bearbeitungsstation weiter bewegt werden, beispielsweise indem die Form 4 auf einem kreisrunden Takttisch 6 angeordnet ist, wie in Fig. 1 dargestellt ist.

In der Betriebsstellung, die in Fig. 4A dargestellt ist, tritt der Hauptkörper 20 über einen Zentrierflansch 9 in Eingriff mit einer Ringzentrierung 8, die an der Form 4 vorgesehen ist. Dabei wird der Eingriff der Ringabsätze 10A, 11A des Hubflansches 10 und des Tragrings 11 gelöst, so daß die Ringabsätze 10A, 11A entkoppelt werden und keine Kräfte in die Vorrichtung einleiten. Der Hauptkörper 20 kann hierdurch in einer vorbestimmten koaxialen Stellung an der Form 4 positioniert werden. Die Zentrierung erfolgt dabei über den Eingriff der Ringzentierung 8 der Glasform 4 mit dem Zentrierflansch 9 der Vorrichtung. Die winkelgenaue Lage der Vorrichtung wird über den Eingriff einer Anschlagfläche 9A des Zentrierflansches 9 mit einer Stirnfläche 8A der Ringzentrierung 8 sichergestellt.

In dem zylindrischen Hauptkörper 20 ist ein Drehkörper 21 drehbar gelagert. Der Drehkörper 21 wird über eine Doppelgelenkwelle 14 angetrieben und weist auf einem vorgegebenen Umfang Wärmequellen 13 in der Form von Gasbrennern sowie Walzräder 12 auf.

Der Abstand der Wärmequellen 13 und der Walzräder 12 von einer Drehachse des Drehkörpers 21 ist dabei so eingestellt, daß eine Ringstufe 3A des Rands eines in der Form 4 befindlichen Trinkglases durch die Wärmequellen 13 und die Walzräder 12 geglättet werden kann.

Anstelle eines Gasbrenners als die Wärmequelle 13 kann auch jede andere Wärmequelle verwendet werden, beispielsweise eine elektrische Heizung, eine Laservorrichtung etc.

Wie in Fig. 4B gezeigt ist, ist die horizontale und vertikale Lage, sowie ein Anstellwinkel der Wärmequelle 13 über eine Wärmequelleneinstellvorrichtung 13.1 einstellbar. Hierdurch kann sowohl eine Einstellung bezüglich des zu glättenden Durchmessers eines Glasprodukts erfolgen als auch eine Einstellung bezüglich der eingebrachten Wärmemenge bzw. -intensität. Die optimale Einstellung wird dann durch Versuche ermittelt, um die Glättung des fertigen Glasprodukts zu verbessern.

Durch die genaue Positionierung des Drehkörpers 20 gegenüber dem Glasprodukt sowie durch den frei einstellbaren Abstand der Wärmequelle 13 gegenüber der Ringstufe 3A kann eine verbesserte Glättungsbehandlung des Glasprodukts erzielt werden. Darüber hinaus ist die Reproduzierbarkeit erheblich verbessert, da durch die Ringzentrierung 8 und den Zentrierflansch 9 immer dieselbe lagegenaue Positionierung des Drehkörpers 21 mit den Wärmequellen 13 gegenüber dem Glasprodukt erreicht wird.

Darüber hinaus kann durch geringen Abstand der Wärmequelle 13 gegenüber der Ringstufe der Energieverbrauch reduziert werden. Hierdurch wird auch der Boden 3 des Glasprodukts und die Form 4 weniger aufgeheizt, so dass anschließend weniger stark abgekühlt werden muss.

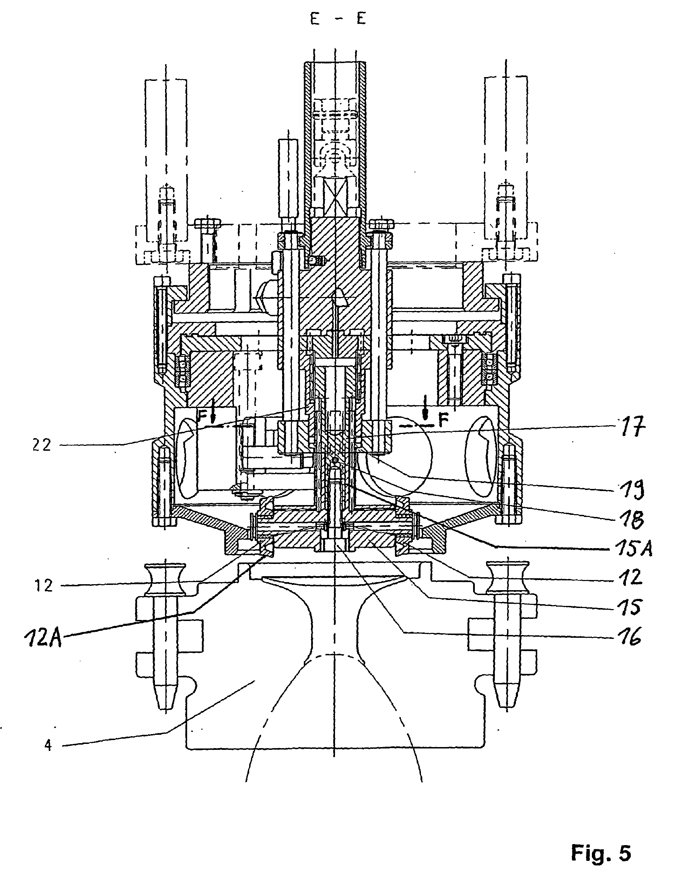

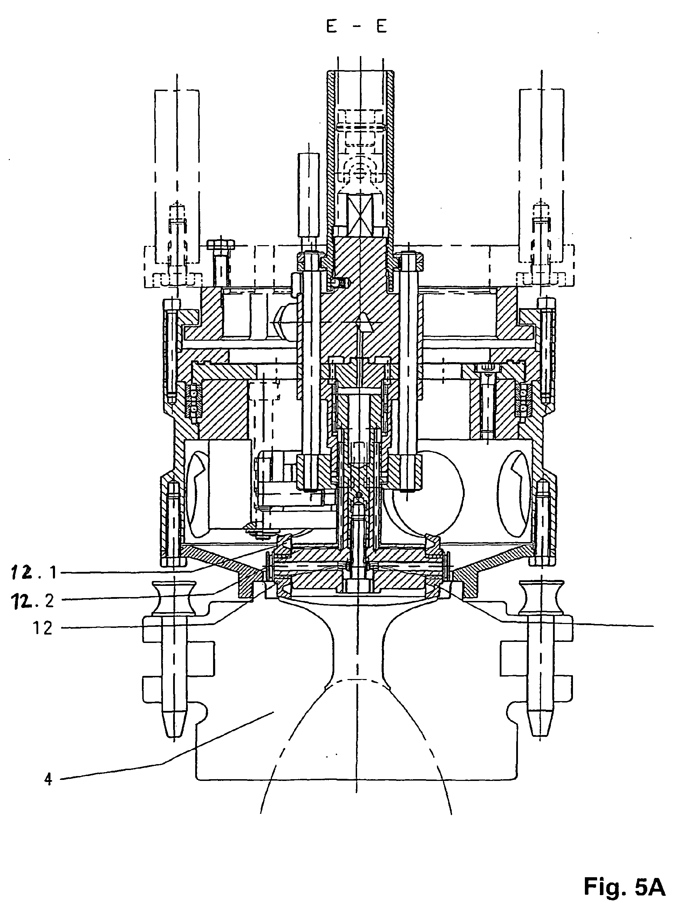

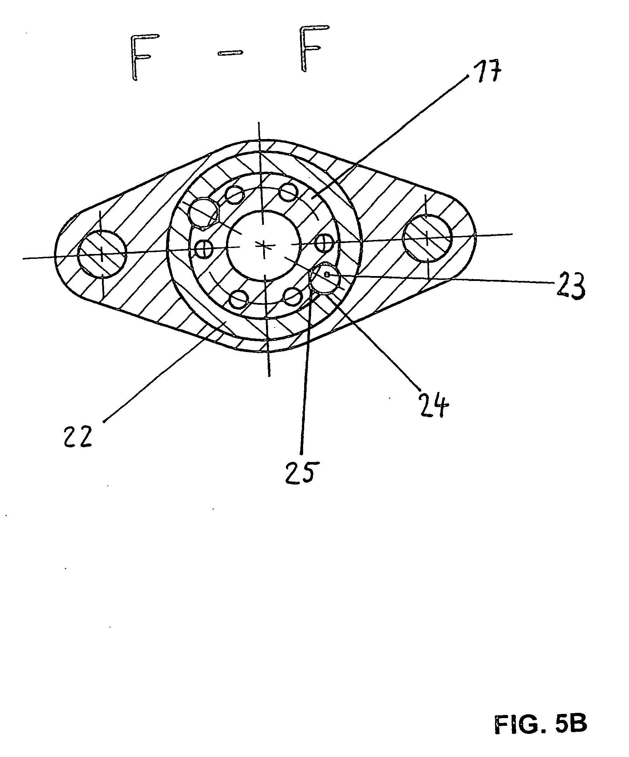

Nachfolgend wird eine Walzvorrichtung nun für die mechanische Glättung der Ringstufe 3A beschrieben. Diese Walzvorrichtung besteht vorzugsweise aus einem Paar Walzräder 12, die über ein Gleitlager mit einer Walzradachse 15 verbunden sind. Die Walzradachse 15 hat vorzugsweise eine T-Form und ist über eine Zentralschraube 16 mit einem Führungskolben 17 verschraubt. Wie in Fig. 5 gezeigt ist, ist die Walzradachse 15 konzentrisch zu dem Drehkörper 21 angebracht, indem ein Walzradachsendorn 15A in eine zylindrische Aufnahme des Führungskolbens 17 paßgenau eingepaßt ist. Die Baugruppe bestehend aus dem Führungskolben 17 und der Walzradachse 15 ist vertikal gegenüber dem Drehkörper 21 in einem Führungszylinder 22 beweglich. Die Drehbewegung des Drehkörpers 21 wird über zwei Kugeln 23 auf die Walzradachse 15 übertragen, die in einer ersten axialen Nut 24 des Führungszylinders 22 und einer zweiten axialen Nut 25 des Führungskolbens 17 angeordnet sind, wie in Fig. 5B gezeigt ist. Die Länge der axialen Nuten 24, 25 bestimmt die maximale vertikale Versetzung des Führungskolbens 17 gegenüber dem Drehkörper 21. Der Führungskolben 17 kann von oben mit einem Fluid, vorzugsweise einem Gas wie beispielsweise Luft oder Stickstoff beaufschlagt werden. Hierdurch wird eine Federkraft erzeugt, die je nach eingestelltem Druck der Fluidbeaufschlagung des Führungskolbens 17 eine vorbestimmte Kraft auf die Walzräder 12 für die mechanische Glättung der Ringstufe 3A aufbringt.

Zusätzlich kann jedoch noch eine mechanische Feder, beispielsweise eine Spiraldruckfeder zwischen dem Führungszylinder 22 und dem Führungskolben 17 angeordnet sein. Um ein weiches Aufsetzen der Walzräder 12 auf der Ringstufe 3A zu ermöglichen, kann der Druck der Fluidbeaufschlagung des Führungskolbens 17 beim Absenken der Vorrichtung reduziert werden. Es ist sogar denkbar, den Führungskolben 17 beim Absenken der Vorrichtung mit Unterdruck zu beaufschlagen, um das Aufsetzen der Walzräder 12 noch weicher zu gestalten.

Der Grad der mechanischen Glättung kann optimiert werden, indem Versuche mit unterschiedlichen Drücken der Fluidbeaufschlagung durchgeführt werden. Eine Oberfläche der Walzräder 12, die mit der Ringstufe 3A in Eingriff tritt, ist vorzugsweise kegelförmig ausgestaltet. Die Erfindung ist jedoch nicht auf diese Ausgestaltung beschränkt, sondern es können auch Walzräder 12 zum Einsatz kommen, die eine zylindrische Oberfläche haben, eine ballenförmige Oberfläche, eine konvexe oder konkave oder eine wellenförmige Oberfläche. Vorzugsweise ist die Walzradachse 15 so gestaltet, daß sie durch alleiniges Lösen der Zentralschraube 16 durch eine andere Walzradachse 15 ausgewechselt werden kann. Die andere Walzradachse 15 hat denselben Walzradachsendorn 15A, um eine paßgenaue Zentrierung mit dem Führungskolben 17 zu ermöglichen. Es kann ein Satz Walzradachsen 15 vorgesehen sein mit unterschiedlichen zu glättenden Durchmessern, die einen entsprechenden radialen Abstand der Walzräder 12 von der Achse des Walzradachsendorns 15A haben. Darüber hinaus können die Walzräder 12 auswechselbar sein, um andere Walzräder 12 mit einer unterschiedlichen Walzfläche 12A einzusetzen.

Zur Kühlung der Walzräder 12 wird ein Fluid über einen Fluidkanal 12.2, der in der Walzradachse 15 angeordnet ist, zu den Walzrädern 12 geleitet. Die Walzräder 12 sind dabei mit einer Fluidführung 12.1 vorzugsweise in der Gestalt einer Hohlkehle an ihrer dem Fluidkanal 12.1 zugewandten Seite ausgestaltet. Es kann ein von der Druckbeaufschlagung unterschiedliches Fluid zu dem Fluidkanal 12.2 geleitet werden. Beispielsweise kann die Druckbeaufschlagung mit Luft oder Stickstoff erfolgen, und die Walzräder können mit Aerosol gekühlt werden. Auf einfache Weise kann jedoch Druckluft eingesetzt werden, die sowohl zu der Druckbeaufschlagung als auch zur Kühlung der Walzräder 12 eingesetzt werden kann. Hierzu sind separate Kanäle für die Druckbeaufschlagung und die Kühlung angeordnet.

Die durch die Walzräder 12 erzielte mechanische Glättung führt zu dem Vorteil, daß die Glättungsbehandlung erheblich verkürzt werden kann gegenüber einer nur durch Schwerkraft erzielten Glättungsbehandlung nach dem Stand der Technik. Darüber hinaus kann die Qualität des Glasprodukts als auch die zur Glättungsbehandlung erforderliche Zeit durch Aussuchen geeigneter Walzräder aus einem Satz Walzräder und durch Einstellen des Fluiddrucks optimiert werden.

Des weiteren kann durch die zusätzliche mechanische Glättung auch eine Ringstufenhöhe von mehr als 0,4 mm geglättet werden, so dass die Ausbeute bei der Glasproduktherstellung erhöht werden kann.

Durch paarweises Anordnen der Walzräder 12 wird ein Verkanten des Drehkörpers 21 sowie eine ungewollte Neigung der Walzradachse 15 gegenüber der Horizontalen vermieden. Anstelle eines Paars Walzräder 12 können auch mehrere Paare Walzräder beispielsweise zwei Paare Walzräder angeordnet werden.

Der Antrieb des Drehkörpers 21 über die Doppelgelenkwelle 14 kann alternativ auch über einen Elektromotor erfolgen, der oberhalb des Hauptkörpers 20 angebracht wird. Um die Baugröße der gesamten Vorrichtung zu verringern, kann jedoch auch ein Elektromotor oder eine Turbine bzw. ein Luftmotor in die Baugruppe bestehend aus dem Hauptkörper 20 und dem Drehkörper 21 integriert werden.

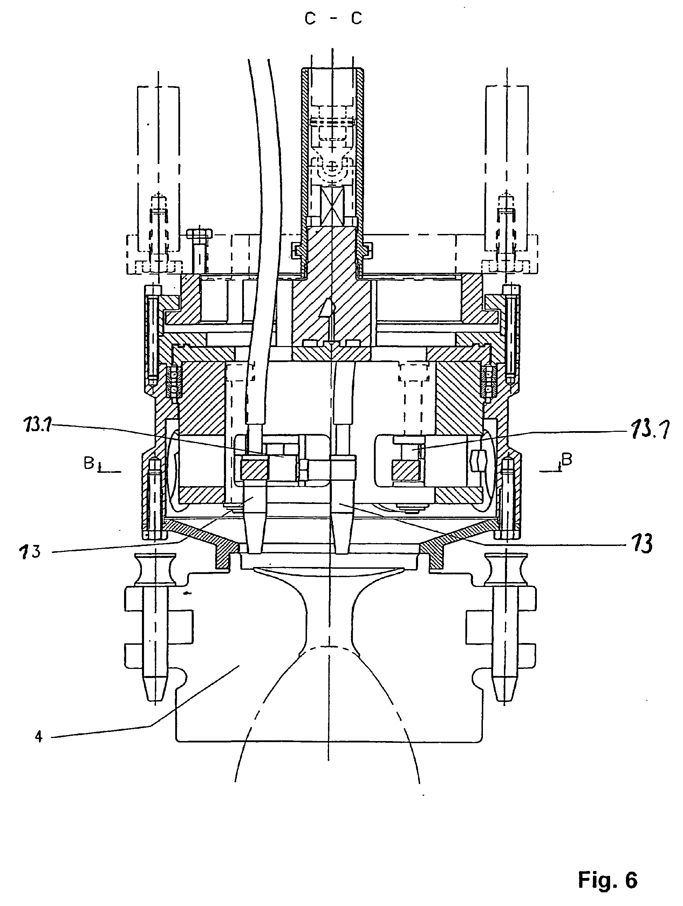

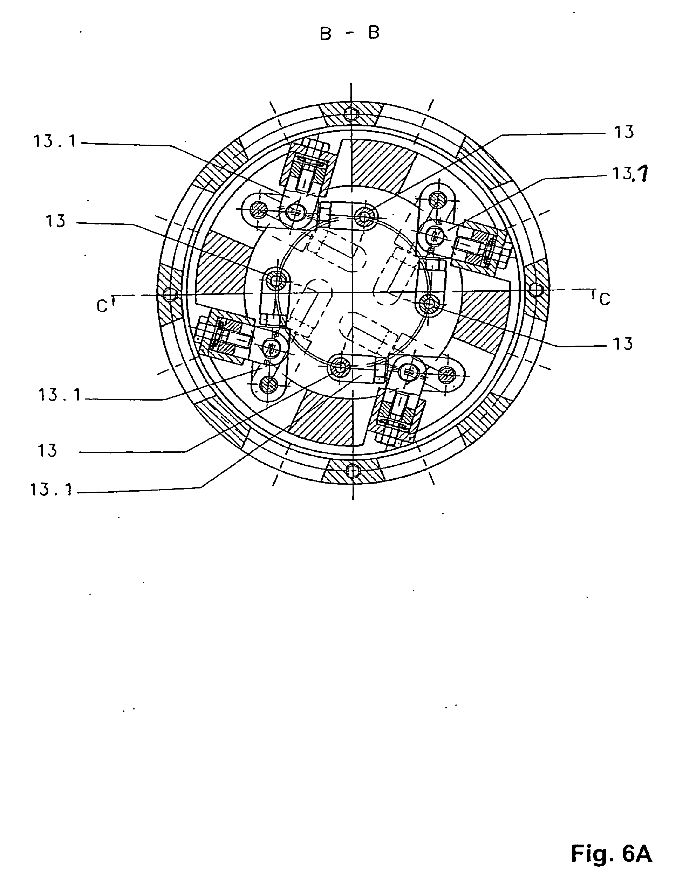

Nachfolgend wird ein zweites bevorzugtes Ausführungsbeispiel der erfindungsgemäßen Vorrichtung unter Bezugnahme auf Fig. 6 und Fig. 6A beschrieben. Dieses zweite Ausführungsbeispiel hat keine Walzräder 12, sondern statt dessen ein weiteres Paar Wärmequellen 13, so daß insgesamt vier Wärmequellen 13 am Umfang des Drehkörpers 21 angebracht sind, wie in Fig. 6A gezeigt ist. Hierdurch kann noch mehr Wärme auf die Ringstufe 3A aufgebracht werden. Denkbar ist auch noch mehr Wärmequellen 13 als vier beispielsweise sechs oder acht anzuordnen. Da die Vorrichtung des zweiten Ausführungsbeispiels bezüglich des Hauptkörpers 20, des Drehkörpers 21, der Zentrierung 9 usw. genauso wie das erste Ausführungsbeispiel aufgebaut ist, kann hierzu die gleiche Vorrichtung verwendet werden. Je nach Einsatzzweck kann dann entweder eine aus einem Führungszylinder 22, Führungskolben 17, Walzradachse 15 etc. bestehende mechanische Glättungsvorrichtung oder alternativ ein weiteres Paar Wärmequellen 13 in dieselbe erfindungsgemäße Vorrichtung eingebaut werden. Hierdurch wird eine besonders variable Glättungsvorrichtung geschaffen. Beim Einsatz von mehreren Glättungsvorrichtungen können die meisten Bauteile für eine Glättungsvorrichtung des ersten und des zweiten Ausführungsbeispiels gleich hergestellt werden. Somit wird die Produktivität bei der Herstellung der Vorrichtung erhöht.

Vorzugsweise ist der Zentrierflansch 9 auswechselbar, beispielsweise durch Anschrauben an dem Hauptkörper 20, so daß Zentrierflansche 9 mit unterschiedlichem Durchmessern angeschraubt werden können. Hierdurch kann die Vorrichtung an Formen 4 mit unterschiedlichen Ringzentrierungen 8 angepaßt werden. Darüber hinaus kann ein verschlissener Zentrierflansch 9 leicht ausgewechselt werden.

Nachfolgend wird die Arbeitsweise der erfindungsgemäßen Vorrichtung beschrieben.

Nach dem Pressen bzw. Gießen eines Glasprodukts in einer Glasform 4, wie in Fig. 1 gezeigt ist, wird ein Preßstempel 1 und ein Zylinderring 2 der Pressstation vertikal nach oben bewegt und die Glasform 4 mit dem darin befindlichem Glasprodukt 3 wird zu einer Glättungsstation beispielsweise über einen Takt- oder Drehtisch 6 bewegt. Alternativ kann die Form 4 auch entlang eines Förderbandes bewegt werden oder die Form 4 kann stationär sein, wobei dann die Pressstation und die Glättungsstation bewegt werden.

Fig. 4 und 5 zeigen die Anordnung der Glasform 4 unterhalb der Glättungsvorrichtung. Die Glättungsvorrichtung wird nun nach unten bewegt, indem der Hauptkörper 20 nach unten bewegt wird. Dies erfolgt durch entsprechende Betätigung der (nicht gezeigten) Aktuatoren für die Vertikalbewegung des Hubflansches 10 und somit des Tragrings 11, der mit dem Hubflansch 10 in Eingriff befindlich ist. Durch die Abwärtsbewegung tritt nun der Zentrierflansch 9 der Vorrichtung in Eingriff mit der Ringzentrierung 8 der Glasform 4. Hierdurch wird eine lagegenaue Positionierung der Glättungsvorrichtung (Zentrierung und Winkellage) gegenüber der Glasform 4 und somit gegenüber dem Glasprodukt erzielt.

Nun kann der Glättungsvorgang beginnen, indem der Drehkörper 21 über die Doppelgelenkwelle 14 angetrieben wird und in eine Kreisbewegung versetzt wird. Außerdem wird die Wärmequelle 13 betrieben, um die Ringstufe 3A zum Schmelzen zu bringen. Vorzugsweise sind die Wärmequellen 13 permanent eingeschaltet.

Wenn die Vorrichtung mit dem Walzrädern 12 bestückt ist, wie in dem ersten Ausführungsbeispiel beschrieben ist, erfolgt des weiteren eine mechanische Glättung durch den Druck der Walzräder 12 auf die Ringstufe 3A, der über die Druckbeaufschlagung des Führungskolbens 17 einstellbar ist. Die Qualität der Glättung kann gegenüber dem Stand der Technik erheblich verbessert werden, da die Wärmequellen 13 näher an die Ringstufe 3A herangebracht werden können. Die mechanische Glättung durch die Walzräder 12 führt zu eine weiter verbesserten Glättung des Glasprodukts. Durch den geringeren Abstand der Wärmequelle 13 von dem Glasprodukt kann die erforderliche Energie der Wärmequelle 13 vermindert werden, außerdem wirken die Ringzentrierung 8 und der Zentrierflansch 9 als eine Wärmeisolation, um eine Abstrahlung der von den Wärmequellen 13 abgegebenen Wärme nach Außen zu verhindern. Der Wirkungsgrad der Wärmequellen 13 kann hierdurch erheblich verbessert werden. Außerdem kann die für die Glättungsbehandlung erforderliche Zeit erheblich verkürzt werden, wodurch die Produktivität bei der Glättungsbehandlung der Glasprodukte erheblich gesteigert werden kann. Durch die Wärmequelleneinstellvorrichtung 13.1 kann die Effizienz der Wärmequellen 13 weiter gesteigert werden, außerdem kann die Qualität der Glättungsbehandlung verbessert werden. Darüber hinaus können Glasprodukte mit unterschiedlichen Durchmessern durch entsprechendes Einstellen der Wärmequelle 13 über die Wärmequelleneinstellvorrichtung 13.1 bearbeitet werden.

Die lagegenaue Positionierung der Vorrichtung gegenüber der Glasform 4 wird dadurch verbessert, daß die Vorrichtungstragemittel bestehend aus der Ringzentrierung 8 und dem Zentrierflansch 9 in der abgesenkten Position, wie in Fig. 4A und 5A gezeigt ist, entkoppelt werden. Diese Entkoppelung erfolgt durch Vorsehen eines axialen Spiels zwischen dem Hubflansch 10 und dem Tragring 11 in der abgesenkten Stellung. Das heißt, daß sich der Hubflansch 10 und der Tragring 11 in der abgesenkten Stellung außer Eingriff befinden. Erst beim Anheben der Vorrichtung durch Betätigen der (nicht gezeigten) Aktuatoren tritt der Tragring 11 in Eingriff mit dem Hubflansch 10, wenn der Hubflansch 10 sich nach oben bewegt.

### Bezugszeichen

- 1: Pressstempel
- 2: Zylinderring
- 3: Boden
- 3A: Ringstufe
- 4: Form
- 5: Glasoberteil
- 6: Takttisch
- 7: Brenner
- 8: Ringzentrierung
- 8A: Stirnfläche
- 9: Zentrierflansch
- 9A: Anschlagfläche
- 10: Hubflansch
- 10A: Ringabsatz
- 11: Tragring
- 11A: Ringabsatz
- 12: Walzrad
- 12A: Walzfläche
- 12.1: Fluidführung
- 12.2: Fluidkanal
- 13: Wärmequelle
- 13.1: Wärmequellen-Einstellvorrichtung
- 14: Doppelgelenkwelle
- 15: Walzradachse
- 15A: Walzradachsendorn
- 16: Zentralschraube
- 17: Führungskolben
- 18: Mitnahmestift
- 19: Anschlagring
- 20: Hauptkörper
- 21: Drehkörper
- 22: Führungszylinder23 Kugel
- 24: Nut
- 25: Nut

## Patentansprüche

1. Vorrichtung zur Glättungsbehandlung von Glasprodukten, insbesondere von Trinkgläsern, mit:
einer Glasform (4) für die Aufnahme eines zu glättenden Glasprodukts;
einem Hauptkörper (20), der gegenüber einer Glasform (4) vertikal beweglich ist und einen Zentrierflansch (9) aufweist zum in Eingriff treten mit einer an der Glasform (4) angebrachten Ringzentrierung (8);
einem Drehkörper (21), der an dem Hauptkörper (20) drehbar gelagert ist und zumindest eine Wärmequelle (13) aufweist, die durch die Drehung des Drehkörpers (21) auf einer Kreisbahn in Gegenüberlage zu dem Glasprodukt drehbar ist, so dass durch die durch die Wärmequelle (13) auf das Glasprodukt aufgebrachte Wärme dieses zumindest teilweise geschmolzen wird, um an dem Glasprodukt entlang der Kreisbahn eine Glättungsbehandlung durchzuführen.

2. Vorrichtung nach Anspruch 1, wobei der Zentrierflansch (9) mit einer stirnseitigen Anschlagfläche (9A) versehen ist, um mit einer Stirnfläche (8A) der Ring-zentrierung (8) der Glasform (4) so in Eingriff zu treten, dass eine Winkellage einer Achse des Hauptkörpers (20) sichergestellt ist, wenn der Hauptkörper (20) von einer Hubvorrichtung (10A, 11A) und einer Antriebsvorrichtung (14) kräftefrei entkoppelt ist.

3. Vorrichtung nach Anspruch 1 oder 2, wobei die Wärmequelle (13) ein Gasbrenner ist, der horizontal, vertikal und im Anstellwinkel verstellbar ist.

4. Vorrichtung nach einem der vorherigen Ansprüche, wobei der Drehkörper (21) durch eine längsverschiebbare Doppelgelenkwelle (14) antreibbar ist, die an sein der Wärmequelle (13) entgegengesetztes axiales Ende angeflanscht ist.

5. Vorrichtung nach einem der vorherigen Ansprüche, wobei der Drehkörper (21) zum Bewegen des Drehkörpers (21) oder eines mit dem Drehkörper (21) in Eingriff befindlichen Bauteils (15) in der vertikalen Richtung pneumatisch mit Druck beaufschlagbar ist und der Druck zwischen einem Unterdruck und einem Überdruck einstellbar ist.

6. Vorrichtung nach einem der vorherigen Ansprüche mit zumindest einem an dem Drehkörper (21) angebrachten Walzrad (12), welches derart angeordnet ist, um bei Betätigung der Vorrichtung auf der Kreisbahn auf dem Glas abzurollen, um zusätzlich eine mechanische Glättung des Glases zu erzielen.

7. Vorrichtung nach Anspruch 6, wobei das Walzrad (12) zur Kühlung über einen Gaskanal (12.2) mit einem Gas angeblasen wird.

8. Vorrichtung nach Anspruch 7, wobei das Walzrad (12) eine Gasführung (12.1) zum Leiten des Gases entlang einer Oberfläche des Walzrads (12) aufweist.

9. Vorrichtung nach einem der vorherigen Ansprüche, wobei die Vorrichtung derart konfiguriert ist, dass ein in der Glasform (4) aufgenommenes rotationssymmetrisches Glasprodukt im wesentlichen auf derselben Achse wie der Drehkörper (21) angeordnetist.

10. Verfahren zur Glättungsbehandlung von Glasprodukten mit folgenden Schritten:
Zentrieren eines Hauptkörpers (20) einer Glättungsvorrichtung an einer Glasform (4) der Glättungsvorrichtung durch in Eingriff bringen eines Zentrierflansches (9) des Hauptkörpers (20) mit einer an der Glasform (4) angebrachten Ringzentrierung (8);
Drehen eines Drehkörpers (21) der Vorrichtung; und
Betreiben von zumindest einer Wärmequelle (13), die auf einer Kreisbahn an dem Drehkörper (21) in Gegenüberlage zu einem in der Glasform (4) befindlichen Glasprodukt angeordnet ist, so dass durch die durch die Wärmequelle (13) auf das Glasprodukt aufgebrachte Wärme dieses zumindest teilweise geschmolzen wird, um an dem Glasprodukt entlang der Kreisbahn eine Glättungsbehandlung durchzuführen.

11. Verfahren nach Anspruch 10 mit dem Schritt des Festlegens einer Winkellage der Glättungsvorrichtung durch in Eingriff bringen einer Anschlagfläche (9A) des Zentrierflansches (9) mit einer Stirnfläche (8A) der Ringzentrierung (8) der Glasform (4) und kräftefreies Entkoppeln der Glättungsvorrichtung von einer Hubvorrichtung (10A, 11A) und einer Antriebsvorrichtung (14).

12. Verfahren nach Anspruch 10 oder 11 mit dem Schritt des Einstellens der Wärmequelle (13) in horizontaler und vertikaler Richtung und Einstellen des Anstellwinkels.

13. Verfahren nach einem der Ansprüche 10 bis 12 mit dem Schritt des Abwälzen eines Walzrads (12) auf einer Kreisbahn auf dem Glasprodukt.

14. Verfahren nach Anspruch 13 mit dem Schritt des Erzeugens einer Druckkraft auf eine Walzradachse (15), um die Walzräder (12) mit einer definierten Kraft auf das Glasprodukt zu drücken.

15. Verfahren nach Anspruch 13 oder 14 mit dem Schritt des Kühlens der Walzräder (12) durch Anblasen mit Luft oder Stickstoff.

16. Verfahren nach Anspruch 15 mit dem Schritt des Führens des Fluids entlang einer Oberfläche des Walzrads (12).

## Claims

1. An apparatus for smoothing glass products, in particular drinking glasses, comprising:
a glass mold (4) for receiving a glass product to be smoothed;
a main body (20), which is vertically movable with respect to the glass mold (4) and has a centering flange (9) for engagement with a ring centration (8) attached to the glass mold (4);
a rotary body (21), which is rotatably supported on the main body (20) and has at least one heat source (13) rotatable by the rotation of the rotary body (21) on a circular path opposed to the glass product, so that the glass product is at least partially molten by the heat applied to it by the heat source (13) in order to perform a smoothing treatment on the glass product along the circular path.

2. The apparatus according to claim 1, wherein the centering flange (9) is provided with a front-side stop face (9A) to engage with a front face (8A) of the ring centration (8) of the glass mold (4) such that an angular position of an axis of the main body (20) is ensured when the main body (20) is decoupled from a lifting apparatus (10A, 11 a) and a driving apparatus (14) in a force-free fashion.

3. The apparatus according to claim 1 or 2, wherein the heat source (13) is a gas burner, which is adjustable horizontally, vertically, and with respect to the angle of attack, or setting angle.

4. The apparatus according to one of the preceding claims, wherein the rotary body (21) can be driven by a longitudinally displaceable double joint shaft (14) flanged to the axial end thereof, which is opposite to the heat source (13).

5. The apparatus according to one of the preceding claims, wherein the rotary body (21) can be pneumatically pressurized to move the rotary body (21) or a component (15) engaged with the rotary body (21) in the vertical direction, and the pressure can be adjusted between a negative pressure and a positive pressure.

6. The apparatus according to one of the preceding claims, comprising at least one rolling wheel (12) attached to the rotary body (21), said rolling wheel (12) being arranged so as to roll on, or along, the circular path on the glass upon actuation of the apparatus to additionally achieve mechanical smoothing of the glass.

7. The apparatus according to claim 6, wherein the rolling wheel (12) is blown at with a gas via a gas passage (12.2) for cooling.

8. The apparatus according to claim 7, wherein the rolling wheel (12) has a gas guide (12.1) for guiding the gas along a surface of the rolling wheel (12).

9. The apparatus according to one of the preceding claims, wherein the apparatus is configured such that a rotationally symmetric glass product received in the glass mold (4) is arranged substantially on the same axis as the rotary body (21).

10. A method of smoothing glass products, comprising the following steps:
centering a main body (20) of a smoothing apparatus on a glass mold (4) of the smoothing apparatus by engaging a centering flange (9) of the main body (20) with a ring centration (8) attached to the glass mold (4);
rotating a rotary body (21) of the apparatus; and
operating at least one heat source (13), which is arranged on a circular path on the rotary body (21) opposed to a glass product disposed in the glass mold (4), so that the glass product is at least partially molten by the heat applied to it by the heat source (13) in order to perform a smoothing treatment on the glass product along the circular path.

11. The method according to claim 10, comprising the step of setting an angular position of the smoothing apparatus by engaging a stop face (9A) of the centering flange (9) with a front face (8A) of the ring centration (8) of the glass mold (4) and force-free decoupling of the smoothing apparatus from a lifting apparatus (10A, 11 a) and a driving apparatus (14).

12. The method according to claim 10 or 11, comprising the step of adjusting the heat source (13) in the horizontal and vertical directions and adjusting the angle of attack, or setting angle.

13. The method according to one of claims 10 to 12, comprising the step of rolling a rolling wheel (12) on, or along, a circular path on the glass product.

14. The method according to claim 13, comprising the step of generating a compressive force to a rolling wheel axis (15) to press the rolling wheels (12) onto the glass product with a defined force.

15. The method according to claim 13 or 14, comprising the step of cooling the rolling wheels (12) by blowing with air or nitrogen.

16. The method according to claim 15, comprising the step of guiding the fluid along a surface of the rolling wheel (12).

## Revendications

1. Dispositif de lissage de produits en verre, en particulier de verres à boire, avec:
une forme de verre (4) pour le positionnement du produit en verre à polir ;
un corps principal (20), qui est mobile verticalement en face d'une forme de verre (4) et présente un collet de centrage (9) afin de s'engrener dans un centrage annulaire (8) placé sur la forme de verre (4);
un corps rotatif (21), qui est relié au corps principal (20) par des paliers rotatifs et présente au moins une source de chaleur (13), qui, moyennant la rotation du corps rotatif (21) sur une trajectoire du côté opposé au produit en verre, est orientable de telle sorte que la chaleur transmise par la source de chaleur (13) sur le produit en verre induise au moins une fonte de celui-ci, afin de pouvoir effectuer un lissage le long de cette trajectoire.

2. Dispositif selon la revendication 1, dans lequel le collet de centrage (9) est doté d'une surface d'arrêt (9A) sur la face, afin de s'engrener avec une face de contact (8A) du centrage annulaire (8) de la forme de verre (4), de telle sorte qu'une position relative d'un axe du corps principal (20) soit préservée quand le corps principal (20) est découplé d'un mécanisme élévateur (10A, 11A) et d'un mécanisme moteur (14) par inertie.

3. Dispositif selon la revendication 1 ou 2, dans lequel la source de chaleur (13) est un bec à gaz, réglable sur un axe horizontal, sur un axe vertical et au niveau de l'angle d'incidence.

4. Dispositif selon une des revendications précédentes, dans lequel le corps rotatif (21) peut être entraîné par un arbre à double joint de cadran (14) ajustable dans un axe longitudinal, qui est bridé à l'extrémité axiale opposée à la source de chaleur (13).

5. Dispositif selon une des revendications précédentes, dans lequel le corps rotatif (21) est alimenté en air comprimé afin de mouvoir le corps rotatifs (21) ou une des pièces (15) engrenées avec le corps rotatif (21) dans un axe vertical, la pression étant réglable entre une surpression et une dépression.

6. Dispositif selon une des revendications précédentes avec au moins une roue en rotation (12) placée sur le corps rotatif (21), qui est orientée de telle sorte que, lors de l'utilisation du dispositif, elle roule sur le verre lorsque celui décrit sa trajectoire, afin de réaliser en plus un lissage mécanique du verre.

7. Dispositif selon la revendication 6, dans lequel la roue en rotation (12) est refroidie par un gaz soufflé par le biais d'une arrivée de gaz (12.2).

8. Dispositif selon la revendication 7, dans lequel la roue en rotation (12) présente une adduction gazeuse (12.1) pour guider le gaz le long d'une surface de la roue en rotation (12).

9. Dispositif selon une des revendications précédentes, dans lequel le dispositif est configuré de telle sorte qu'un produit de verre symétrique par rapport à son axe de rotation repris dans la forme de verre (4) est essentiellement orienté selon le même axe que le corps rotatif (21).

10. Méthode pour le lissage de produits en verre avec les étapes suivantes :
Centrer un corps principal (20) d'un dispositif de lissage sur une forme de verre (4) du dispositif de lissage en engrenant un collet de centrage (9) du corps principal (20) avec un centrage annulaire (8) placé sur la forme de verre (4) ;
Faire tourner un corps rotatifs (21) du dispositif ; et
Exploiter au moins une source de chaleur (13), qui est disposée sur une trajectoire passant à proximité du corps rotatif (21) du côté opposé à un produit en verre qui se trouve dans la forme de verre (4), de telle sorte que la chaleur appliquée
sur le produit en verre par le biais de la source de chaleur (13) induise une fonte au moins partielle de ce dernier, afin de procéder à un lissage du produit en verre le long de la trajectoire.

11. Méthode selon la revendication 10 avec l'étape de la détermination de la position relative d'incidence du dispositif de lissage moyennant l'engrenage d'une surface d'arrêt (9A) du collet de centrage (9) avec une surface de contact (8A) du centrage annulaire (8) de la forme de verre (4), et le découplage par inertie du dispositif de lissage d'un mécanisme élévateur (10A, 11A) et d'un mécanisme moteur (14).

12. Méthode selon la revendication 10 ou 11, avec l'étape du réglage de la source de chaleur (13) sur un axe horizontale et vertical, et réglage de son angle d'incidence.

13. Méthode selon une des revendications de 10 à 12 avec l'étape d'une roue en rotation (12) roulant sur une trajectoire sur le produit en verre.

14. Méthode selon la revendication 13 avec l'étape de la création d'une force de pression sur un axe de la roue en rotation (15) afin d'appuyer les roues en rotation (12) avec une force définie sur le produit en verre.

15. Méthode selon la revendication 13 ou 14 avec l'étape du refroidissement des roues en rotation (12) par l'apport d'air ou d'azote.

16. Méthode selon la revendication 15 avec l'étape du guidage du fluide le long d'une surface de la roue en rotation (12).
